(19) Europäisches Patentamt
European Patent Office
Office européen des brevets

(11) **EP 2 838 768 B1**

(12) **EUROPEAN PATENT SPECIFICATION**

(45) Date of publication and mention
of the grant of the patent:
**11.10.2017 Bulletin 2017/41**

(51) Int Cl.:
*B60W 10/06* (2006.01)      *B60W 10/28* (2006.01)
*B60W 20/00* (2016.01)      *B60K 6/20* (2007.10)
*B60W 30/192* (2012.01)

(21) Application number: **13716372.1**

(22) Date of filing: **15.03.2013**

(86) International application number:
**PCT/IB2013/000508**

(87) International publication number:
**WO 2013/156831 (24.10.2013 Gazette 2013/43)**

(54) **ENGINE SYSTEM AND CONTROL METHOD FOR ENGINE SYSTEM**

MOTORSYSTEM UND STEUERVERFAHREN FÜR DAS MOTORSYSTEM

SYSTÈME DE MOTEUR ET PROCÉDÉ DE COMMANDE POUR SYSTÈME DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2012 JP 2012096015**

(43) Date of publication of application:
**25.02.2015 Bulletin 2015/09**

(73) Proprietor: **Toyota Jidosha Kabushiki Kaisha
Toyota-shi, Aichi-ken, 471-8571 (JP)**

(72) Inventors:
• **YAMAMOTO, Kosuke
Toyota-shi,
Aichi-ken, 471-8571 (JP)**

• **NAKAO, Hidefumi
Toyota-shi,
Aichi-ken, 471-8571 (JP)**
• **SUGANUMA, Hiroyuki
Toyota-shi,
Aichi-ken, 471-8571 (JP)**

(74) Representative: **J A Kemp
14 South Square
Gray's Inn
London WC1R 5JJ (GB)**

(56) References cited:
**EP-A2- 1 923 288      DE-A1-102012 000 460
US-A1- 2002 116 099      US-A1- 2011 246 013**

**Description**

BACKGROUND OF THE INVENTION

1. Field of the Invention

The invention relates to an engine system and a control method for the engine system.

2. Description of Related Art

There is known a turbocharger that utilizes exhaust gas of an internal combustion engine (an engine). A turbine is rotated with the aid of exhaust gas of the engine, and a compressor compresses air and supplies the engine therewith. For example, in Japanese Patent Application Publication No. 2007-16641 (JP-2007-16641 A), there is disclosed an art of supplying a turbine with exhaust gas of a fuel cell as well as exhaust gas of an engine. The electric power generated by the fuel cell is used to charge a battery. In order to restrain the battery from deteriorating, it is preferable to avoid overcharge of the battery. For example, in each of Japanese Patent Application Publication No. 2010-70030 (JP-2010-70030 A) and Japanese Patent Application Publication No. 63-265527 (JP-63-265527 A), there is disclosed an art of controlling the amount of charge of a battery such that the battery can be charged through the use of the electric power regenerated from a motor in braking a vehicle. In order to enhance transience from a stopped state of the engine to an operating state of the engine, it is preferable that the turbine rotate even during stop of the engine. However, the rotational speed of the turbine may significantly fall during stop of the engine idling (hereinafter referred to as idle-stop). This may cause a deterioration in transience. The invention provides an engine system that can make an improvement in transience.

US 2011/0246013 describes a power distribution system comprising at least one fuel cell that is selectively operated in response to conditions to provide power to electrical loads and/or to charge an electrical storage device such as a vehicle battery. One form of an alternator can be selectively engaged or disengaged to provide power to the electrical loads and/or to charge the electrical storage device. Either or both of the fuel cell and alternator can be operated to provide electrical power.

SUMMARY OF THE INVENTION

In a first aspect of the invention, there is provided an engine system as defined in appended claim 1.

In the aforementioned configuration, the fuel cell control unit may stop the fuel cell from charging the battery or limit the charge amount of the battery to a value equal to or smaller than the discharge amount of the battery when the internal combustion engine control unit stops the internal combustion engine and the state of charge is equal to or larger than a second limit value that is larger than the first limit value. The fuel cell control unit may not limit the charge amount when the internal combustion engine control unit stops the internal combustion engine and the state of charge is smaller than the second limit value.

In the aforementioned configuration, the fuel cell control unit may not limit the charge amount when the state of charge becomes smaller than the first limit value during stop of the internal combustion engine after the internal combustion engine control unit stops the internal combustion engine and the fuel cell stops charging the battery due to the state of charge becoming equal to or larger the second limit value.

In a second aspect of the invention, there is provided a control method as defined in appended claim 14.

According to the invention, an engine system that can make an improvement in transience can be provided.

BRIEF DESCRIPTION OF THE DRAWINGS

Features, advantages, and technical and industrial significance of an exemplary embodiment, of the invention will be described below with reference to the accompanying drawings, in which like numerals denote like elements, and wherein:

FIG. 1 is a schematic diagram exemplifying an engine system according to the embodiment of the invention;

FIGS. 2A and 2B are diagrams exemplifying timing charts of the engine system according to the embodiment of the invention;

FIG. 3 is a functional block diagram exemplifying the configuration of an ECU according to the embodiment of the invention;

FIGS. 4A and 4B are flowcharts exemplifying the control of the engine system according to the embodiment of the invention; and

FIG. 5 is a flowchart exemplifying the control of the engine system according to the embodiment of the invention.

DETAILED DESCRIPTION OF EMBODIMENT

The embodiment of the invention will be described using the drawings.

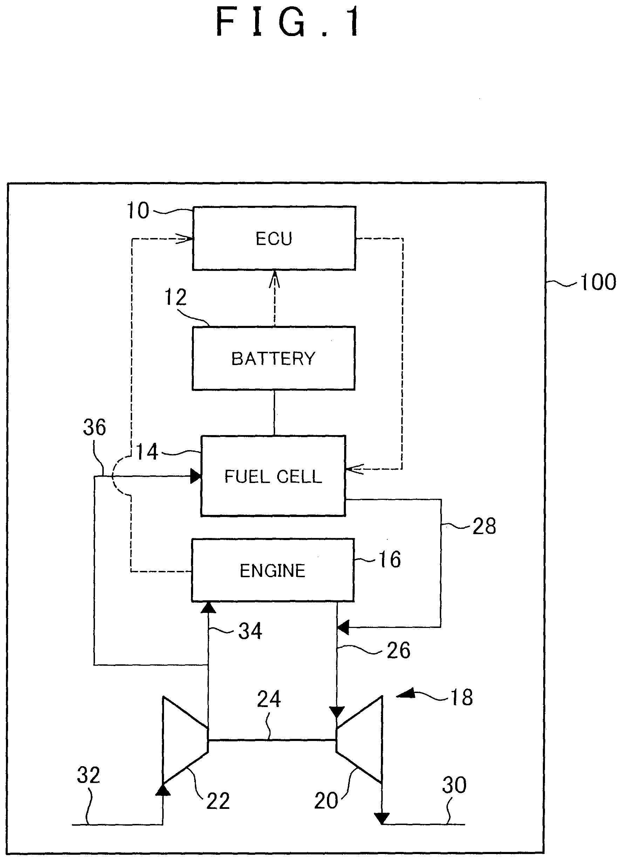

The embodiment of the invention is an example in which the limit value of a state of charge is changed. FIG. 1 is a schematic diagram exemplifying an engine system 100 according to the embodiment of the invention.

As shown in FIG. 1, the engine system 100 is equipped with an engine control unit (ECU) 10, a battery 12, a fuel cell 14, an engine 16, and a turbocharger 18. The engine system 100 is mounted on a vehicle, for example, a hybrid vehicle or the like.

The battery 12 functions as a power supply for a pump (not shown), valves (not shown), an air-conditioner (not shown), a motor (not shown) and the like. Accordingly, the engine system 100 is not required to be equipped with an alternator. The fuel cell 14 functions as a power supply as is the case with the battery 12, and charges the battery 12. The fuel cell 14 has a structure in which a fuel electrode as an anode, an air electrode as a cathode, and a cell containing an electrolyte are coupled to one another, and generates electric power through an electrochemical reaction of fuel and air. That is, for example, a solid oxide fuel cell (SOFC) can be adopted as the fuel cell 14. The turbocharger 18 is equipped with a turbine 20, and a compressor 22 that is coupled to the turbine 20 by a shaft 24.

Exhaust gas discharged by the engine 16 is supplied to the turbine 20 through an exhaust channel 26. The exhaust channel 26 and an exhaust channel 28 are coupled to each other, and exhaust gas discharged by the fuel cell 14 is supplied to the turbine 20 through the exhaust channels 26 and 28. The turbine 20 rotates through exhaust gas. Exhaust gas is discharged to the outside of the vehicle through an exhaust channel 30. The compressor 22 rotates in synchronization with the turbine 20. The compressor 22 is supplied with air through an intake channel 32. The compressor 22 compresses air and supplies compressed air with the intake channel 34. An intake channel 36 is coupled to the intake channel 34. The air compressed by the compressor 22 is supplied to the engine 16 through the intake channel 34, and is supplied to the fuel cell 14 through the intake channels 34 and 36. As indicated by a broken line, the ECU 10 acquires an operation state of the engine 16 and a state of charge (SOC) of the battery 12, and controls the fuel cell 14. Next, the operation of the engine system 100 will be described referring to an example in which the engine 16 operates, stops in an idle state and starts operating again.

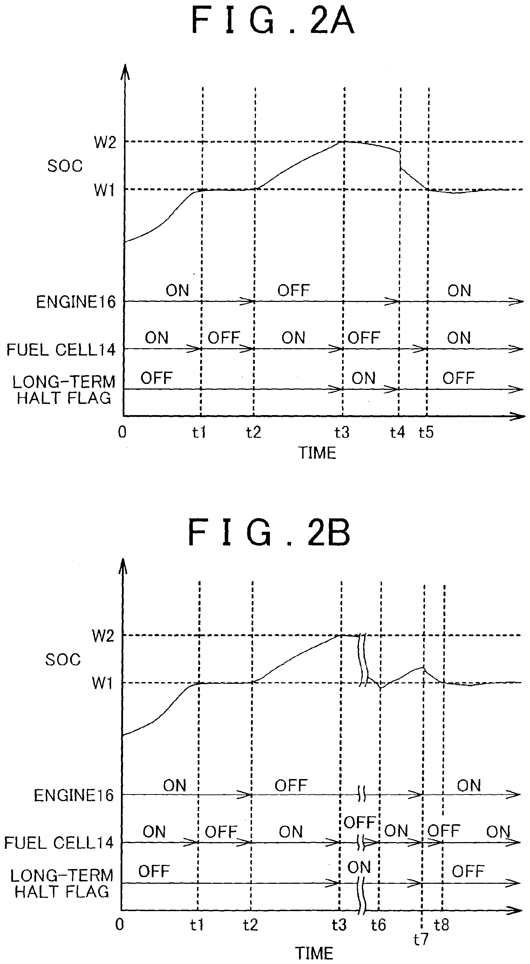

FIGS. 2A and 2B are diagrams exemplifying timing charts of the engine system 100. In each of the timing charts, the axis of abscissa represents time, and the axis of ordinate represents, sequentially from above, SOC, the ON/OFF state of the engine 16, the ON/OFF state of the fuel cell 14, and the ON/OFF state of a long-term halt flag. While time passes from 0 toward t5 in FIG. 2A, time passes from 0 toward t8 in FIG. 2B.

As shown in FIGS. 2A and 2B, a first limit value W1 and a second limit value W2 that is larger than the first limit value W1 are determined as limit values. Each limit value is an upper-limit of the SOC. If the SOC reaches the limit value, the amount of electric power generated by the fuel cell 14 to charge the battery 12 (hereinafter referred to as a charge amount) is limited. The first limit value W1 is a limit value during operation (ON) of the engine 16, and the second limit value W2 is a limit value during idle-stop (OFF) of the engine 16.

As shown in FIG. 2A, the engine 16 is in operation (ON) from 0 to a time t2. The ECU 10 adopts the first limit value W1 as a limit value. From 0 to a time t1, the SOC is smaller than the first limit value W1. Accordingly, the fuel cell 14 is driven (ON). That is, the fuel cell 14 generates electric power to charge the battery 12. When the fuel cell 14 is ON, the charge amount of the fuel cell 14 is not limited, and is larger than the discharge amount of the battery 12. At the time t1, the SOC is equal to the first limit value W1, and hence the fuel cell 14 is OFF. The OFF state of the fuel cell 14 means, for example, a state where the fuel cell 14 does not charge the battery 12, or a state where the charge amount of the fuel cell 14 is equal to or smaller than the discharge amount of the battery 12. During idle-stop, the battery 12 discharges, for example, electric power for operating auxiliaries (a pump, an air-conditioner and the like).

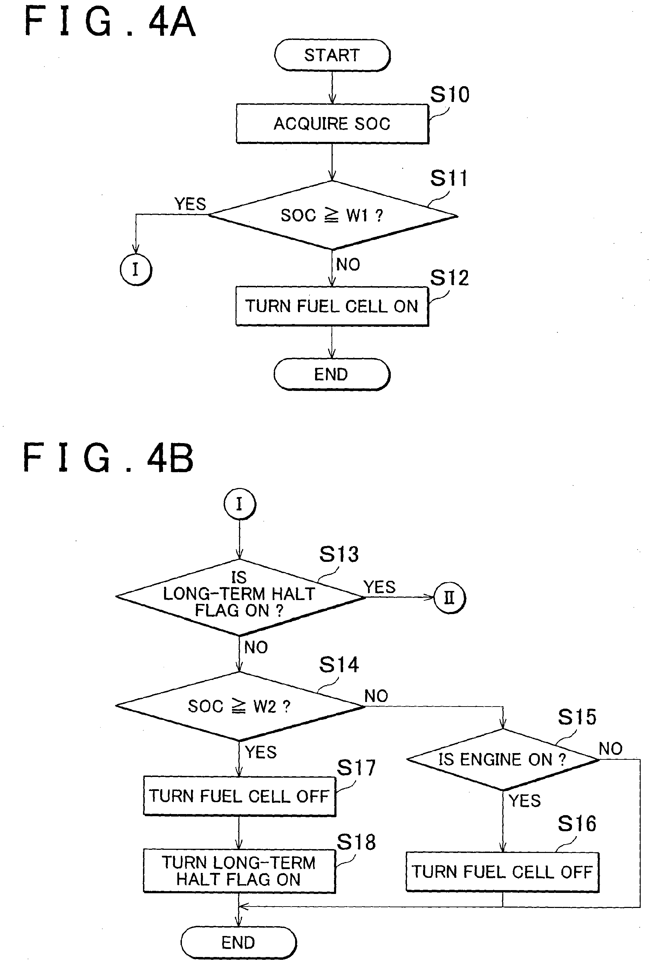

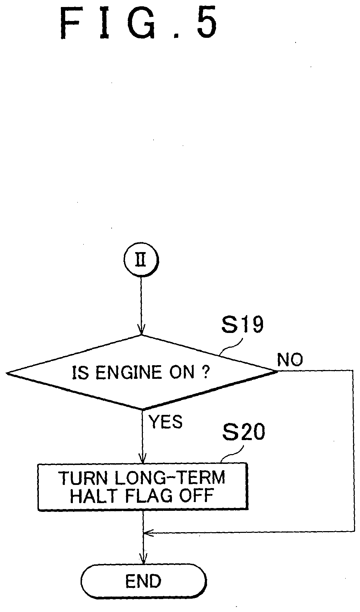

At the time t2, the engine 16 stops (OFF). The second limit value W2 is adopted as a limit value. At the time t2, the SOC is smaller than the second limit value W2. Thus, the fuel cell 14 turns ON. At a time t3, the SOC becomes equal to the second limit value W2, and hence the fuel cell 14 turns OFF. At this moment, the ECU 10 turns a long-term halt flag ON. The long-term halt flag indicates that the vehicle has been stopped for a long time during parking, halting, traffic congestion or the like. The long-term halt flag will be described later in detail with reference to FIG. 4A, FIG. 4B and FIG. 5.

At a time t4, the engine 16 starts operating again. This corresponds to, for example, the restart of the engine 16 from idle-stop. In response to the restart of the engine 16, the first limit value W1 is adopted as a limit value. The SOC is larger than the first limit value W1, and hence the fuel cell 14 turns OFF. At a time t5, the SOC becomes smaller than the first limit value W1, and hence the fuel cell 14 turns ON.

An example in which the vehicle is halted longer than in the example of FIG. 2A will be described with reference to FIG. 2B. The period between 0 and the time t3 in FIG. 2B is the same as in the example of FIG. 2A. In FIG. 2B, the engine 16 is stopped from the time t3 to a time t6. The period between the time t3 and the time t6 is longer than, for example, the period between the time t3 and the time t4 in FIG. 2A. At the time t6, the SOC becomes smaller than the first limit value W1. At this moment, even if the long-term stop flag is ON, the fuel cell 14 turns ON. At a time t7, the engine 16 starts operating again. The SOC is larger than the first limit value W1, and the fuel cell 14 turns OFF. At a time t8, the SOC becomes smaller than the first limit value W1, and hence the fuel cell 14 turns ON.

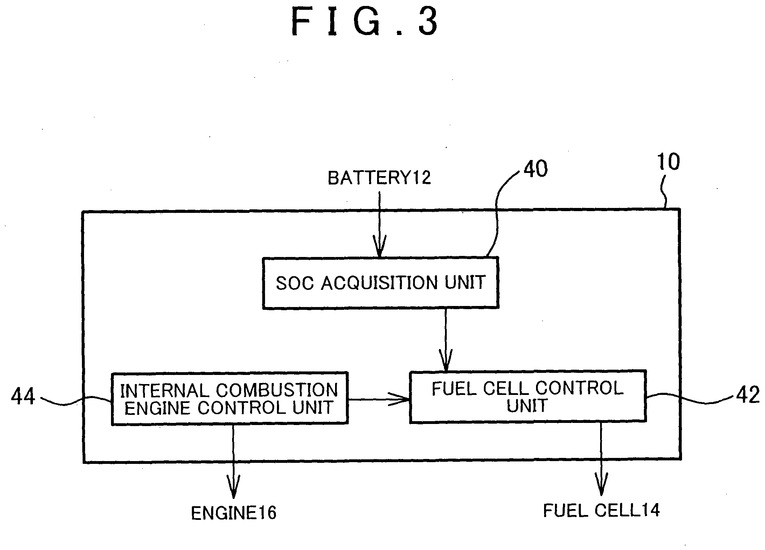

The operation of the engine system 100 will be described further. FIG. 3 is a functional block diagram exemplifying the configuration of the ECU 10. As shown in FIG. 3, the ECU 10 functions as an SOC acquisition unit 40, a fuel cell control unit 42, and an internal combustion engine control unit 44. The SOC acquisition unit 40 acquires an SOC of the battery 12. The fuel cell control unit 42 controls the ON/OFF state of electric power generation of the fuel cell 14 on the basis of an operation state of the engine 16, the SOC of the battery 12 and the like. The internal combustion engine control unit 44 automatically stops the engine 16 (idle-stop) upon fulfillment of a predetermined stop condition, and automatically starts the engine 16 upon fulfillment of a predetermined restoration condition. The stop condition is fulfilled, for example, when the accelerator opening degree, the speed of the vehicle, or the rotational speed of the engine 16 falls below a predetermined value. The restoration condition is fulfilled, for example, when a driver of the vehicle takes his or her foot off a brake pedal or shifts the gear.

FIGS. 4A and 4B and FIG. 5 are flowcharts exemplifying the control of the engine system 100.

As shown in FIG. 4A, the SOC acquisition unit 40 acquires an SOC (step S10). The fuel cell control unit 42 determines whether or not the SOC is equal to or larger than the first limit value W1 (step S11). If the SOC is smaller than the first limit value W1 (No in step S11), the fuel cell control unit 42 turns the fuel cell 14 ON (step S12). This corresponds to the period between 0 and the time t1 in FIGS. 2A and 2B, the time t5 in FIG. 2A, and the time t8 in FIG. 2B. After step S12, the control ends. After the end of the control, the control resumes from step S10.

If Yes in step S11, the fuel cell control unit 42 determines whether or not the long-term halt flag is ON (step S13, see I in FIGS. 4A and 4B). The case of Yes in step S13 will be described later. If No in step S 13, the fuel cell control unit 42 determines whether or not the SOC is equal to or larger than the second limit value W2 (step S14). If No in step S 14, the control proceeds to step S15.

In step S 15, the fuel cell control unit 42 determines whether or not the engine 16 is ON. If Yes in step S15, the fuel cell control unit 42 turns the fuel cell 14 OFF (step S16). This corresponds to the period between the time t1 and the time t2 in FIGS. 2A and 2B. After step S16, the control ends. If No in step S 15, the control ends. This corresponds to the period between the time t2 and the time t3 in FIGS. 2A and 2B, and the fuel cell 14 is ON. After step S 15 or S16, the control ends.

If Yes in step S14, the fuel cell control unit 42 turns the fuel cell 14 OFF (step S 17). The fuel cell control unit 42 turns the long-term halt flag ON (step S18). This corresponds to the time t3 in FIGS. 2A and 2B. After step S18, the control ends.

If the control is resumed after the long-term halt flag turns ON in step S18, the result is Yes in step S 13. In this case, the fuel cell control unit 42 determines whether or not the engine 16 is ON (step S19, see II in FIGS. 4B and 5). If No in step S19, the control ends. This corresponds to a period in which the internal combustion engine control unit 44 automatically stops the engine 16, such as the period between the time t3 and the time t4 in FIG. 2A or the period between the time t3 and the time t6 in FIG. 2B. If Yes in step S19, the fuel cell control unit 42 turns the long-term halt flag OFF (step S20). This corresponds to a case where the internal combustion engine control unit 44 automatically starts the engine 16, such as the time t4 in FIG. 2A or the time t7 in FIG. 2B. After step S20, the control ends.

If the control is repeated after the long-term halt flag turns OFF in step S20, the result is No in step S13. If No in step S14 and Yes in step S15, the fuel cell control unit 42 turns the fuel cell 14 OFF (step S16). This corresponds to the period between the time t4 and the time t5 in FIG. 2A. If the control is repeated after step S18 and the result is No in step S11, the fuel cell control unit 42 turns the fuel cell 14 ON (step S12) even in the case where the long-term halt flag is ON. This corresponds to the period between the time t6 and the time t7 in FIG. 2B.

Exhaust gas is discharged from the engine 16, for example, when the engine 16 is ON. No exhaust gas is discharged from the engine 16, for example, when the engine 16 is OFF. Exhaust gas is discharged from the fuel cell 14, for example, when the fuel cell 14 is ON. No exhaust gas or a slight amount of exhaust gas is discharged from the fuel cell 14, for example, when the fuel cell 14 is OFF. For example, in the case where only the first limit value W1 is used as a limit value, the fuel cell 14 is OFF in the period between the time t2 and the time t4. Since exhaust gas from the fuel cell 14 and the engine 16 is not supplied to the turbine 20 over a long time or the amount of exhaust gas decreases, the rotational speed of the turbine 20 significantly falls. In contrast, according to the embodiment of the invention, between the time t2 and the time t3, as indicated by steps S 14 and S 15, the fuel cell 14 is ON and the charge amount is not limited even if the SOC is equal to or larger than the first limit value W1 during idle-stop. Thus, even during idle-stop, exhaust gas from the fuel cell 14 is supplied to the turbine 20. Thus, the rotational speed of the turbine 20 is restrained from falling, and therefore, the enhancement of transience is achieved.

In order to maintain the rotational speed of the turbine 20, it is preferable that the period in which the engine 16 and the fuel cell 14 are OFF (the period between the time t3 and the time t4) be short. In other words, it is preferable that a time period $\Delta t$ between the time t2 and the time t3 be long. Given that the time period $\Delta t$ represents a general halt time period (an idle-stop time period) in the case where the vehicle waits for a traffic light to change, the time t3 approaches the time t4 or coincides with the time t4. As a result, the rotational speed of the turbine 20 is maintained by exhaust gas from the fuel cell 14, and an improvement in transience is made. Incidentally, the aforementioned general idle-stop time period can be determined by, for example, inspecting in advance a situation where the vehicle is used or the like.

If the difference between the first limit value W1 and the second limit value W2 is small, the SOC swiftly reaches the second limit value W2, and the fuel cell 14 turns OFF. Thus, the time period Δt becomes short, and the time period in which no exhaust gas is supplied or the amount of exhaust gas is reduced becomes long. As a result, a deterioration in transience is caused. In order to make an improvement in transience, it is preferable to adopt the general idle-stop period as the time period Δt as described above, and determine the first limit value W1 on the basis of the time period Δt. The first limit value W1 is determined according to, for example, a formula shown below.

$$W1 = (W3-W4) \times \Delta t / (C \times V)$$

W3 denotes an amount of electric power generated by the fuel cell 14. The magnitude of W3 is determined such that the fuel cell 14 discharges an amount of exhaust gas that is sufficient to cause rotation of the turbine 20 that is required for the maintenance of transience. W4 denotes an electric power consumed by the auxiliaries. C denotes a rated charge capacity of the battery 12. V denotes an output voltage of the battery 12. By determining the first limit value W1 from the aforementioned formula, the fuel cell 14 remains ON even after the engine 16 turns OFF, and an improvement in transience is made.

If the fuel cell 14 is ON and the SOC is equal to or larger than the first limit value W1 during the period in which the engine 16 is ON as in the period between the time t1 and the time t2 in FIGS. 2A and 2B, the fuel cell control unit 42 turns the fuel cell 14 OFF. If the internal combustion engine control unit 44 turns the engine 16 OFF and the SOC is equal to or larger than the second limit value W2 as in the period between the time t3 and the time t4, the fuel cell control unit 42 turns the fuel cell 14 OFF. Accordingly, overcharge is suppressed during both the period in which the engine 16 is ON and the period in which the engine 16 is OFF. The second limit value W2 may be, for example, the rated charge capacity of the battery 12, or can be set to 95% or 90% of the rated charge capacity or the like. By setting the second limit value W2 smaller than the rated charge capacity, charging is made possible through regeneration in braking the vehicle. For example, the second limit value W2 may not be set. In this case, the fuel cell 14 is charged through regeneration even if the SOC is larger than the first limit value W1 during idle-stop. Therefore, an improvement in transience is made.

If the SOC is smaller than the first limit value W1 during operation of the engine 16 as in the period between 0 and the time t1 in FIG. 2A, the fuel cell 14 is ON. If the SOC is smaller than the second limit value W2 as in the period between the time t2 and the time t3 in FIG. 2A, the fuel cell 14 is ON. That is, in these cases, the fuel cell control unit 42 does not limit the charge amount of the fuel cell 14. Accordingly, the SOC is restrained from becoming insufficient during both the period in which the engine 16 is ON and the period in which the engine 16 is OFF. The SOC becomes equal to the second limit value W2 during idle-stop as at the aforementioned time t3, whereby the fuel cell 14 turns OFF. After that, if the SOC becomes smaller than the first limit value W1 during idle-stop as in the period between the time t6 and the time t7 in FIG. 2B, the fuel cell 14 turns ON even in the case where the long-term halt flag is ON. Accordingly, the SOC is restrained from becoming insufficient even if the vehicle is halted over a long period.

Although the embodiment of the invention has been described in detail, the invention should not be limited to this specific embodiment thereof, but can be modified or altered in various manners within the scope of the invention as set forth in the claims.

**Claims**

1. An engine system (100) comprising:

    a battery (12);
    a fuel cell (14) configured to charge the battery (12);
    a turbocharger (18) that is supplied with exhaust gas discharged from the fuel cell (14);
    an internal combustion engine (16) that is supplied with air from the turbocharger (18);
    an internal combustion engine control unit (44) that stops the internal combustion engine (16) automatically upon fulfillment of a predetermined stop condition, and that starts the internal combustion engine (16) automatically upon fulfillment of a predetermined restoration condition; **characterized by**:

    a fuel cell control unit (42) configured to stop the fuel cell (14) from charging the battery (12) or limit a charge amount of the battery (12) to a value equal to or smaller than a discharge amount of the battery (12) when the fuel cell (14) is driven during operation of the internal combustion engine (16) and a state of charge of the fuel cell (14) is equal to or larger than a first limit value (W1), wherein:

    the fuel cell control unit (42) is configured not to limit the charge amount when the internal combustion engine control unit stops (44) the internal combustion engine (16) and the fuel cell (14) is driven during stop of the internal combustion engine (16).

2. The engine system according to claim 1, wherein the fuel cell control unit (42) stops the fuel cell (14) from charging the battery (12) or limits the charge amount of the battery (12) to a value equal to or smaller than the discharge amount of the battery (12) when the internal combustion engine control unit (44) stops the internal combustion engine (16) and the state of charge is equal to or larger than a second limit value (W2) that is larger than the first limit value (W1), and

the fuel cell control unit (42) does not to limit the charge amount when the internal combustion engine control unit (44) stops the internal combustion engine (16) and the state of charge is smaller than the second limit value (W2).

3. The engine system according to claim 2, wherein the fuel cell control unit (42) does not limit the charge amount when the state of charge becomes smaller than the first limit value (W1) during stop of the internal combustion engine (16) after the internal combustion engine control unit (44) stops the internal combustion engine (16) and the fuel cell (14) stops charging the battery (12) due to the state of charge becoming equal to or larger the second limit value (W2).

4. A control method for an engine system (100) that is equipped with a battery (12), a fuel cell (14), a turbocharger (18), and an internal combustion engine (16), the control method **characterized by** comprising:

    stopping charging the battery (12) or limiting a charge amount of the fuel cell (14) to a value equal to or smaller than a discharge amount of the battery (12) when the fuel cell (14) is driven during operation of the internal combustion engine (16) and a state of charge of the fuel cell (14) is equal to or larger than a first limit value (W1); and

    refraining from limiting the charge amount when the internal combustion engine (16) is stopped and the fuel cell (14) is driven during stop of the internal combustion engine (16).

5. The control method according to claim 4, wherein the battery (12) is stopped from being charged or the charge amount is limited to a value equal to or smaller than the discharge amount of the battery (12) when the internal combustion engine (16) is stopped and the state of charge is equal to or larger than a second limit value (W2) that is larger than the first limit value (W1), and

    the charge amount is not limited when the internal combustion engine (16) is stopped and the state of charge is smaller than the second limit value (W2).

6. The control method according to claim 5, wherein the charge amount is not limited when the state of charge becomes smaller than the first limit value (W1) during stop of the internal combustion engine (16) after the internal combustion engine (16) is stopped and the battery (12) is stopped from being charged due to the state of charge becoming equal to or larger the second limit value (W2).

**Patentansprüche**

1. Motorsystem (100), das aufweist:

    eine Batterie (12),
    eine Brennstoffzelle (14), die konfiguriert ist, um die Batterie (12) zu laden,
    einen Turbolader (18), der mit Abgas, das von der Brennstoffzelle (14) abgegeben wird, beliefert wird,
    einen Verbrennungsmotor (16), der mit Luft von dem Turbolader (18) beliefert wird,
    eine Verbrennungsmotorsteuerungseinheit (44), die den Verbrennungsmotor (16) bei Erfüllung einer vorgegebenen Stoppbedingung automatisch stoppt und die den Verbrennungsmotor (16) bei Erfüllung einer vorgegebenen Wiederherstellungsbedingung automatisch startet, **gekennzeichnet durch**:

    eine Brennstoffzellensteuerungseinheit (42), die konfiguriert ist, um die Brennstoffzelle (14) zu stoppen, die Batterie (12) zu laden, oder eine Aufladungsmenge der Batterie (12) auf einen Wert, der gleich einer Entladungsmenge der Batterie (12) oder kleiner als diese ist, zu begrenzen, wenn die Brennstoffzelle (14) während einem Betrieb des Verbrennungsmotors (16) angetrieben wird und ein Zustand einer Aufladung der Brennstoffzelle (14) gleich einem ersten Grenzwert (W1) oder größer als dieser ist, wobei:

    die Brennstoffzellensteuerungseinheit (42) konfiguriert ist, um die Aufladungsmenge nicht zu begrenzen, wenn die Verbrennungsmotorsteuerungseinheit (44) den Verbrennungsmotor (16) stoppt und die Brennstoffzelle (14) während einem Stopp des Verbrennungsmotors (16) angetrieben wird.

2. Motorsystem gemäß Anspruch 1, wobei die Brennstoffzellensteuerungseinheit (42) die Brennstoffzelle (14) davon abhält, die Batterie (12) zu laden, oder die Aufladungsmenge der Batterie (12) auf einen Wert, der gleich der Entladungsmenge der Batterie (12) oder kleiner als diese ist, begrenzt, wenn die Verbrennungsmotorsteuerungseinheit (44) den Verbrennungsmotor (16) stoppt und der Zustand einer Aufladung gleich einem zweiten Grenzwert (W2), der größer als der erste Grenzwert (W1) ist, oder größer als dieser ist, und die Brennstoffzellensteuerungseinheit (42) die Aufladungsmenge nicht begrenzt, wenn die Verbrennungsmotorsteuerungseinheit (44) den Verbrennungsmotor (16) stoppt und der Zustand einer Aufladung kleiner als der zweite Grenzwert (W2) ist.

3. Motorsystem gemäß Anspruch 2, wobei die Brennstoffzellensteuerungseinheit (42) die Aufladungsmenge nicht begrenzt, wenn der Zustand einer Aufladung kleiner als der erste Grenzwert (W1) während einem Stopp des Verbrennungsmotors (16) wird, nachdem die Verbrennungsmotorsteuerungseinheit (44) den Verbrennungsmotor (16) stoppt und die Brennstoffzelle (14) ein Aufladen der Batterie (12) stoppt, und zwar aufgrund dessen, dass der Zustand einer Aufladung gleich dem zweiten Grenzwert (W2) oder größer als dieser wird.

4. Steuerungsverfahren für ein Motorsystem (100), das mit einer Batterie (12), einer Brennstoffzelle (14), einem Turbolader (18) und einem Verbrennungsmotor (16) ausgerüstet ist, wobei das Steuerungsverfahren **dadurch gekennzeichnet ist, dass** es aufweist:

ein Stoppen eines Aufladens der Batterie (12) oder ein Begrenzen einer Aufladungsmenge der Brennstoffzelle (14) auf einen Wert, der gleich einer Entladungsmenge der Batterie (12) oder kleiner als diese ist, wenn die Brennstoffzelle (14) während einem Betrieb des Verbrennungsmotors (16) angetrieben wird und ein Zustand einer Aufladung der Brennstoffzelle (14) gleich einem ersten Grenzwert (W1) oder größer als dieser ist, und

ein Unterlassen eines Begrenzens der Aufladungsmenge, wenn der Verbrennungsmotor (16) gestoppt ist und die Brennstoffzelle (14) während einem Stopp des Verbrennungsmotors (16) angetrieben wird.

5. Steuerungsverfahren gemäß Anspruch 4, wobei die Batterie (12) gestoppt wird, geladen zu werden, oder die Aufladungsmenge auf einen Wert, der gleich der Entladungsmenge der Batterie (12) oder kleiner als diese ist, begrenzt wird, wenn der Verbrennungsmotor (16) gestoppt ist und der Zustand einer Aufladung gleich einem zweiten Grenzwert (W2), der größer als der erste Grenzwert (W1) ist, oder größer als dieser ist, und die Aufladungsmenge nicht begrenzt wird, wenn der Verbrennungsmotor (16) gestoppt ist und der Zustand einer Aufladung kleiner als der zweite Grenzwert (W2) ist.

6. Steuerungsverfahren gemäß Anspruch 5, wobei die Aufladungsmenge nicht begrenzt wird, wenn der Zustand einer Aufladung kleiner als der erste Grenzwert (W1) während einem Stopp des Verbrennungsmotors (16) wird, nachdem der Verbrennungsmotor (16) gestoppt ist und die Batterie (12) gestoppt wird, geladen zu werden, und zwar aufgrund dessen, dass der Zustand einer Aufladung gleich dem zweiten Grenzwert (W2) oder größer als dieser wird.

**Revendications**

1. Système de moteur (100) comprenant :

une batterie (12) ;
une pile à combustible (14) configurée pour charger la batterie (12) ;
un turbocompresseur (18) qui est alimenté avec un gaz d'échappement déchargé depuis la pile à combustible (14) ;
un moteur à combustion interne (16) qui est alimenté avec de l'air depuis le turbocompresseur (18) ;
une unité de commande du moteur à combustion interne (44) qui arrête automatiquement le moteur à combustion interne (16) dès qu'une condition d'arrêt prédéterminée a été remplie et qui démarre automatiquement le moteur à combustion interne (16) dès qu'une condition de rétablissement prédéterminée a été remplie ; **caractérisé par** :

une unité de commande de pile à combustible (42) configurée pour interrompre le chargement de la batterie (12) par la pile à combustible (14) ou limiter une quantité de charge de la batterie (12) à une valeur égale ou inférieure à une quantité de décharge de la batterie (12) lorsque la pile à combustible (14) est entraînée pendant le fonctionnement du moteur à combustion interne (16) et qu'un état de charge de la pile à combustible (14) est égal ou supérieur à une première valeur limite (W1), dans lequel :

l'unité de commande de pile à combustible (42) est configurée pour ne pas limiter la quantité de charge lorsque l'unité de commande du moteur à combustion interne arrête (44) le moteur à combustion interne (16) et que la pile à combustible (14) est entraînée pendant l'arrêt du moteur à combustion interne (16).

2. Système de moteur selon la revendication 1, dans lequel

l'unité de commande de pile à combustible (42) interrompt le chargement de la batterie (12) par la pile à combustible (14) ou limite la quantité de charge de la batterie (12) à une valeur égale ou inférieure à une quantité de décharge de la batterie (12) lorsque l'unité de commande du moteur à combustion interne (44) arrête le moteur à combustion interne (16) et que l'état de charge est égal ou supérieur à une seconde valeur limite (W2) qui est supérieure à la première valeur limite (W1), et

l'unité de commande de pile à combustible (42) ne limite pas la quantité de charge lorsque l'unité de commande du moteur à combustion interne (44) arrête le moteur à combustion interne (16) et que l'état de charge est inférieur à la seconde valeur limite (W2).

3.  Système de moteur selon la revendication 2, dans lequel
l'unité de commande de pile à combustible (42) ne limite pas la quantité de charge lorsque l'état de charge devient inférieur à la première valeur limite (W1) pendant un arrêt du moteur à combustion interne (16) après que l'unité de commande du moteur à combustion interne (44) a arrêté le moteur à combustion interne (16) et que la pile à combustible (14) a arrêté de charger la batterie (12) du fait que l'état de charge devient égal ou supérieur à la seconde valeur limite (W2).

4.  Procédé de commande pour un système de moteur (100) qui est équipé d'une batterie (12), d'une pile à combustible (14), d'un turbocompresseur (18) et d'un moteur à combustion interne (16), le procédé de commande **caractérisé en ce qu'**il comprend :

le fait d'interrompre le chargement de la batterie (12) ou de limiter une quantité de charge de pile à combustible (14) à une valeur égale ou inférieure à une quantité de décharge de la batterie (12) lorsque la pile à combustible (14) est entraînée pendant le fonctionnement du moteur à combustion interne (16) et qu'un état de charge de la pile à combustible (14) est égal ou supérieur à une première valeur limite (W1) ; et
le fait d'éviter de limiter la quantité de charge lorsque le moteur à combustion interne (16) est arrêté et que la pile à combustible (14) est entraînée pendant l'arrêt du moteur à combustion interne (16).

5.  Procédé de commande selon la revendication 4, dans lequel
le chargement de la batterie (12) est interrompu ou la quantité de charge est limitée à une valeur égale ou inférieure à la quantité de décharge de la batterie (12) lorsque le moteur à combustion interne (16) est arrêté et que l'état de charge est égal ou supérieur à une seconde valeur limite (W2) qui est supérieure à la première valeur limite (W1), et
la quantité de charge n'est pas limitée lorsque le moteur à combustion interne (16) est arrêté et l'état de charge est inférieur à la seconde valeur limite (W2).

6.  Procédé de commande selon la revendication 5, dans lequel
la quantité de charge n'est pas limitée lorsque l'état de charge devient inférieur à la première valeur limite (W1) pendant un arrêt du moteur à combustion interne (16) après que le moteur à combustion interne (16) a été arrêté et que le chargement de la batterie (12) a été interrompu du fait que l'état de charge devient égal ou supérieur à la seconde valeur limite (W2).

# FIG.1

# FIG.2A

# FIG.2B

# F I G . 3

BATTERY12

40

10

SOC ACQUISITION UNIT

INTERNAL COMBUSTION
ENGINE CONTROL UNIT

44

FUEL CELL CONTROL
UNIT

42

ENGINE16

FUEL CELL14

EP 2 838 768 B1

# FIG.4A

START

ACQUIRE SOC — S10

SOC ≧ W1 ? — S11
YES → I
NO

TURN FUEL CELL ON — S12

END

# FIG.4B

I

IS LONG-TERM HALT FLAG ON ? — S13
YES → II
NO

SOC ≧ W2 ? — S14
NO → IS ENGINE ON ? — S15
NO
YES → TURN FUEL CELL OFF — S16

YES → TURN FUEL CELL OFF — S17

TURN LONG-TERM HALT FLAG ON — S18

END

# FIG.5

```
        ( II )
          |
          v
        S19
   /IS ENGINE ON ?\ ----NO----+
   \              /           |
          |                   |
         YES        S20       |
          |                   |
          v                   |
   +----------------+         |
   | TURN LONG-TERM |         |
   | HALT FLAG OFF  |         |
   +----------------+         |
          |                   |
          |<------------------+
          v
      (  END  )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007016641 A
- JP 2007 A
- JP 16641 A

- JP 2010070030 A
- JP 63265527 A
- US 20110246013 A